# EUROPEAN PATENT SPECIFICATION

(11) **EP 0 489 013 B1**
(45) Date of publication and mention of the grant of the patent: **15.03.1995**
(21) Application number: 90907922.0
(22) Date of filing: 26.04.1990
(51) Int. Cl.: H04B 1/38, H04B 1/08, H05K 7/00

(54) **RADIO AND ELECTRONIC CARD ASSEMBLY**
RADIO- UND ELEKTRONISCHE KARTENEINHEIT
ENSEMBLE DE RADIO ET CARTE ELECTRONIQUE

(30) Priority: 01.05.1989 US 345262
(43) Date of publication of application: 10.06.1992
(73) Proprietor: MOTOROLA, INC., Schaumburg, IL 60196 (US)
(72) Inventor: DZUNG, John, C., Sunrise, FL 33322 (US); MONAHAN-MITCHELL, Timothy, A., Deerfield Beach, FL 33442 (US); QUIROGA, Emilio, J., Pompano Beach, FL 33069 (US); SIDDOWAY, Craig, F., Ft. Lauderdale, FL 33326 (US); CHAMBERS, Randell, P., Ft. Lauderdale, FL 33326 (US)
(74) Representative: Dunlop, Hugh Christopher
(86) International application number: US9002243
(87) International publication number: WO9013952

(56) References cited:
- EP-A- 0 018 940
- EP-A- 0 276 403
- US-A- 4 283 796
- US-A- 4 641 370
- US-A- 4 718 110

## Description

### RADIO AND ELECTRONIC CARD ASSEMBLY

### BACKGROUND OF THE INVENTION

This invention relates to radios in general and particularly to a portable radio utilizing a removable electronic card.

Radios, such as, portable two-way radios are often manufactured to have various options and programmable capabilities. For example, a synthesized two-way radio can include a code plug which can be a removeable memory device. The code plug includes information such as the divisor information for the radio's frequency synthesizer. Other stored control information can relate to coded squelch information, channel scanning, and a myriad of other features and options. Additional, such radios can be configured so that one or more modules can be inserted into the radio to provide particular desired feature. For example, voice encryption, encoding or decoding or other selective signalling circuitry can be included as an optional module. In the known prior art radios, to change an electronic module, it is necessary to have the radio serviced by a trained technician, as such changes are internal to the radio are not readily accessible to the radio user. Electronic modules, code plugs, or other electronic cards are located internally to the radio, in order to provide physical protection for the module. It is desirable to have a radio that a user could readily modify to his particular requirements be insertion of an electronic card.

U.S. patent number 4,283,796 describes a pager having a replaceable card.

### SUMMARY OF THE INVENTION

In accordance with the present invention there is provided a portable radio and electronic card assembly comprising: a radio portion; and a battery portion; the assembly characterized by: latch means removably attaching the battery portion to the radio portion, the battery and radio portion being coupled together to form the radio; and wherein the radio portion includes an opening for receiving the electronic card, the opening being inaccessible when the radio portion and the battery portion are interconnected and being accessible for insertion or removal of the electronic card when the battery portion is detached from the radio portion.

The present invention advantageously provides a user with access to an electronic card that is utilised by a portable radio, while also providing mechanical and electrical protection for the radio and electronic circuitry.

In a preferred embodiment, the battery portion may include means for retaining the electronic card. The battery portion may also include a lip, wherein at least a portion of the electronic card retaining means is located at the lip.

In a preferred embodiment, the battery portion is slideably attached to the radio portion.

An exemplary embodiment of the present invention will now be described with reference to the accompanying drawings.

### BRIEF DESCRIPTION OF THE DRAWINGS

FIG. 1 is a side elevational view of a portable radio in accordance with the present invention.

FIG. 2 is a fragmentary exploded side elevational view of the radio of FIG. 1.

FIG. 3 is a bottom plan view of the radio portion of the radio of FIG. 1.

FIG. 4 is a top plan view of the battery portion of the radio of FIG. 1.

### DESCRIPTION OF THE PREFERRED EMBODIMENT

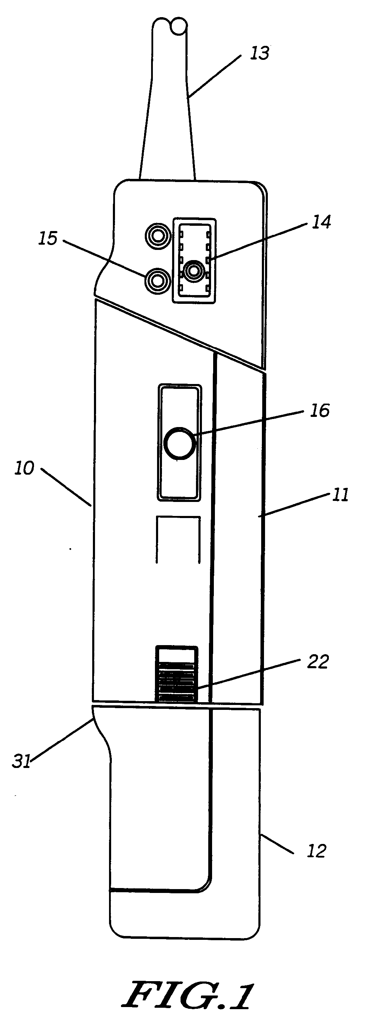

Referring now by characters of reference to the drawings, and first to FIG. 1, it will be understood that radio 10 includes a radio portion 11 and a battery or battery portion 12. The battery and radio portions are operatively coupled together to form the assembled radio 10. As is conventional, the battery 12 can be detached from the radio portion 11 for replacement with another battery.

The radio 10 can comprise a two-way radio which typically includes an antenna 13 carried by the radio portion 11. Various connectors such as an accessory connector 14 and a rf connector 15 can be provided. A push-to-talk switch 16 is also provided on the two-way radio.

A lock or latch 22 is utilized for preventing the battery 12 from inadvertently separating from the radio portion 11. Various attachment arrangements are utilized for mechanically interconnecting the battery and radio portion. Well known arrangements include both twist-off and slide-off arrangements.

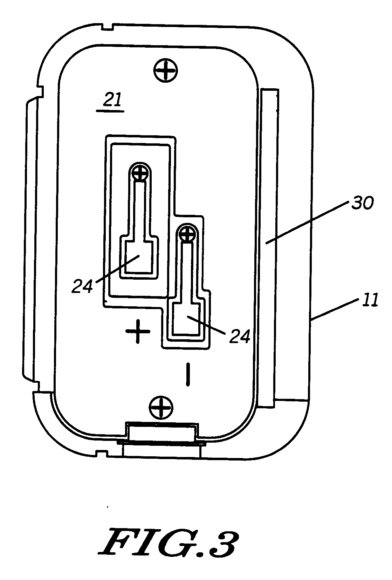

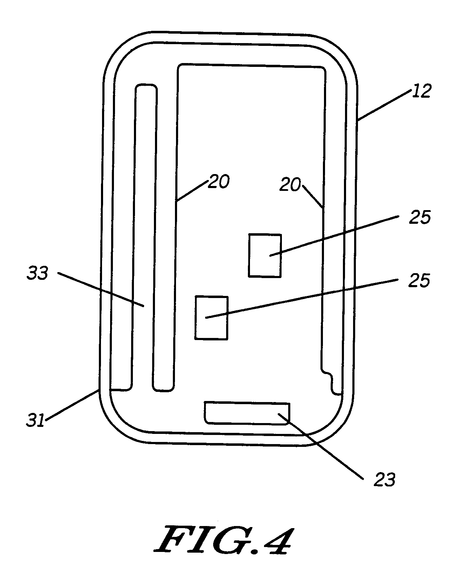

In the preferred embodiment, a conventional battery slide-on arrangement is utilized. The battery 12, as seen in FIG. 4, includes opposed lips 20 which engage a base plate 21 on the bottom of the radio portion 11, illustrated in FIG. 3. The battery latch 22 engages a notch 23 on the top of battery 12. Mating radio contacts 24 and battery contacts 25 are provided for the electrical interconnection of the two radio portions.

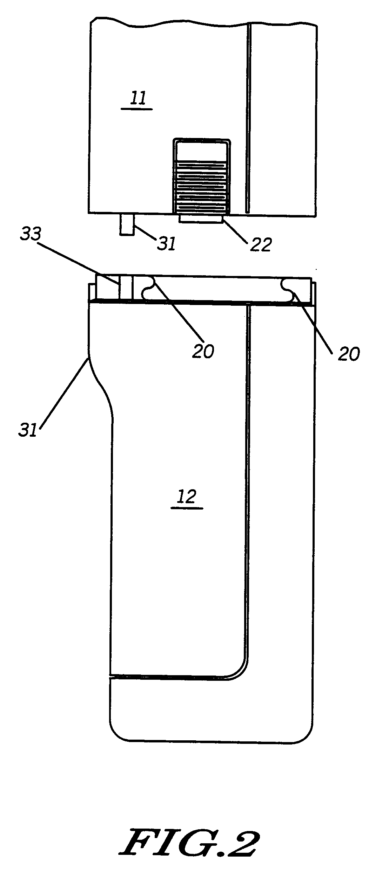

An access slot 30 or opening (shown in Fig. 3.) is provided in the bottom of the radio portion 11 for receiving a removable electronic card 31 (shown in Fig. 2). The card 31 can be a memory or ROM card, or can include active circuitry digital, audio, and/or rf, depending on what options the radio 10 is configured to accept. In the preferred embodiment, the card 31 contains program information useable by the radio 10.

When the radio 10 is assembled, the battery portion 12 covers and protects the electronic card 31 in the slot 30. The battery portion 12 is formed with a groove 33 for capturing the bottom of the electronic card 31, thereby providing additional mechanical protection.

It will be understood, that in order to change or insert the electronic card 31, it is necessary for the user to unlatch and remove the battery 12 from the radio portion 11. Not only does removal of the battery 12 provide access to the electronic card 31, but as a consequence of having to remove the battery from the radio portion 11, it is assured that power is not applied to the radio portion during the time the electronic card is being changed. This can be important when the card 31 contains digital circuitry that might be damaged by electric discharge that might occur when the card is inserted or remove from a powered connection. As is most clearly seen in FIG. 2, the battery portion 12 includes a bumped out lip area 34, where at least a portion of the groove 33, constituting electronic card retaining means, is located.

## Claims

1. A portable radio (10) and electronic card (31) assembly comprising:
a radio portion (11); and
a battery portion (12);
the assembly characterized by:
latch means (22) removably attaching the battery portion (12) to the radio portion (11), the battery and radio portion (12 and 11) being coupled together to form the radio (10); and wherein
the radio portion (11) includes an opening for receiving the electronic card (31), the opening being inaccessible when the radio portion (11) and the battery portion (12) are interconnected and being accessible for insertion or removal of the electronic card (31) when the battery portion (12) is detached from the radio portion (11).

2. A portable radio and electronic card assembly as claimed in claim 1, in which the battery portion (12) includes means (33) for retaining the electronic card (31).

3. A portable radio and electronic card assembly as claimed in claim 2, in which the battery portion (12) includes a lip (34) and at least a portion of the electronic card retaining means (33) is located at the lip (34).

4. A portable radio and electronic card assembly as claimed in any preceding claim, in which the portable radio (10) is a two-way radio.

5. A portable radio and electronic card assembly as claimed in any preceding claim, in which the battery portion (12) is slideably attached to the radio portion (11).

6. A portable radio and electronic card assembly as defined in claim 1 or 5, in which the battery portion (12) includes a groove (33) for retaining the electronic card (31).

## Patentansprüche

1. Aus tragbaren Funkgerät und elektronischer Karte bestehende Baugruppe, die umfaßt:
ein Funkgerätteil (11); und
ein Batterieteil (12);
wobei die Baugruppe gekennzeichnet ist durch:
eine Einrasteinrichtung (22), mit der das Batterieteil (12) abnehmbar an dem Funkgerätteil (11) angebracht wird, wobei das Batterie- und das Funkgerätteil (12 und 11) miteinander verbunden sind und so das Funkgerät (10) bilden; und wobei das Funkgerätteil (11) eine Öffnung zur Aufnahme der elektronischen Karte (31) enthält, wobei die Öffnung nicht zugänglich ist, wenn das Funkgerätteil (11) und das Batterieteil (12) miteinander verbunden sind, und sie zum Einführen bzw. Entnehmen der elektronischen Karte (31) zugänglich ist, wenn das Batterieteil (12) von dem Funkgerätteil (11) getrennt ist.

2. Aus tragbarem Funkgerät und elektronischer Karte bestehende Baugruppe nach Anspruch 1, wobei das Batterieteil (12) eine Einrichtung (33) zum Halten der elektronischen Karte (31) enthält.

3. Aus tragbarem Funkgerät und elektronischer Karte bestehende Baugruppe nach Anspruch 2, wobei das Batterieteil (12) eine Kante (34) enthält, und sich wenigstens ein Abschnitt der Halteeinrichtung (33) für die elektronische Karte an der Kante (34) befindet.

4. Aus tragbarem Funkgerät und elektronischer Karte bestehende Baugruppe nach einem der vorangehenden Ansprüche, wobei das tragbare Funkgerät (10) ein Wechselsprechfunkgerät ist.

5. Aus tragbarem Funkgerät und elektronischer Karte bestehende Baugruppe nach einem der vorangehenden Ansprüche, wobei das Batterieteil (12) verschiebbar an dem Funkgerätteil (11) angebracht ist.

6. Aus tragbarem Funkgerät und elektronischer Karte bestehende Baugruppe nach Anspruch 1 oder 5, wobei das Batterieteil (12) eine Vertiefung (33) zum Halten der elektronischen Karte (31) enthält.

## Revendications

1. Ensemble de radio portable (10) et d'une carte électronique (31) comprenant :
- une partie de radio (11); et
- une partie de batterie (12);
ensemble caractérisé :
- par un moyen de verrouillage (22) pour la fixation amovible de la partie de batterie (12) sur la partie de radio (11), la partie de batterie (12) et la partie de radio (11) étant couplées pour former l'équipement radio (10); et
- par le fait que la partie de radio (11) comprend une ouverture pour recevoir la carte électronique (31), l'ouverture étant inaccessible lorsque la partie de radio (11) et la partie de batterie (12) sont raccordées, et étant accessible pour l'insertion ou l'enlèvement de la carte électronique (31) lorsque la partie de batterie (12) est détachée de la partie de radio (11).

2. Ensemble d'équipement radio portable et de carte électronique selon la revendication 1, dans lequel la partie de batterie (12) comprend un moyen (33) pour le maintien de la carte électronique (31).

3. Ensemble d'équipement radio portable et de carte électronique selon la revendication 2, dans lequel la partie de batterie (12) comprend une lèvre (34) et au moins une partie du moyen de retenue de carte électronique (33) est située sur la lèvre (34).

4. Ensemble d'équipement radio portable et de carte électronique selon l'une quelconque des revendications précédentes, dans lequel l'équipement radio portable (10) est un équipement radio à deux accès.

5. Ensemble d'équipement radio portable et de carte électronique selon l'une quelconque des revendications précédentes, dans lequel la partie de batterie (12) est fixée, de façon coulissante, sur la partie de radio (11).

6. Ensemble d'équipement radio portable et de carte électronique selon la revendication 1 ou 5, dans lequel la partie de batterie (12) comprend une gorge (33) pour le maintien de la carte électronique (31).
